(19) **Europäisches Patentamt**
**European Patent Office**
**Office européen des brevets**

(11) **EP 4 261 859 A1**

(12) **EUROPEAN PATENT APPLICATION**
published in accordance with Art. 153(4) EPC

(43) Date of publication:
**18.10.2023 Bulletin 2023/42**

(21) Application number: **21903605.0**

(22) Date of filing: **15.10.2021**

(51) International Patent Classification (IPC):
$H01F\ 38/14^{(2006.01)}$   $H02J\ 50/10^{(2016.01)}$
$H02J\ 50/00^{(2016.01)}$   $H01F\ 27/22^{(2006.01)}$
$H01F\ 1/03^{(2006.01)}$   $H01F\ 1/08^{(2006.01)}$
$B60L\ 53/12^{(2019.01)}$

(52) Cooperative Patent Classification (CPC):
**B60L 53/12; H01F 1/03; H01F 1/08; H01F 27/22;
H01F 38/14; H02J 50/00; H02J 50/10;** Y02T 10/70;
Y02T 90/14

(86) International application number:
**PCT/KR2021/014403**

(87) International publication number:
**WO 2022/124558 (16.06.2022 Gazette 2022/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.12.2020 KR 20200171698**

(71) Applicant: SKC Co., Ltd.
**Suwon-si, Gyeonggi-do 16338 (KR)**

(72) Inventors:
• **KIM, Nah Young**
**Suwon-si, Gyeonggi-do 16338 (KR)**
• **LEE, Seunghwan**
**Suwon-si, Gyeonggi-do 16338 (KR)**
• **CHOI, Jong Hak**
**Suwon-si, Gyeonggi-do 16338 (KR)**
• **KIM, Tae Kyoung**
**Suwon-si, Gyeonggi-do 16338 (KR)**

(74) Representative: **Dehns**
**St. Bride's House**
**10 Salisbury Square**
**London EC4Y 8JD (GB)**

(54) **WIRELESS CHARGING DEVICE AND MOBILITY MEANS COMPRISING SAME**

(57)   A wireless charging device according to an embodiment can enhance charging efficiency and minimize heat generation while having an appropriate thickness by satisfying a specific expression in which characteristics including the distance between a magnetic part and a shield part and a Q factor are reflected. Therefore, the wireless charging device is useful for a mobility means, such as an electric vehicle, requiring high-capacity power transmission between a transmitter and a receiver.

[Fig. 1]

Distance between magnetic unit and shield unit (mm)

EP 4 261 859 A1

**Description**

**Technical Field**

Embodiments relate to a wireless charging device and to a transportation means (vehicle) comprising the same. More specifically, the embodiments relate to a wireless charging device with an appropriate thickness, enhanced charging efficiency, and minimized heat generation and to a transportation means comprising the same such as an electric vehicle.

**Background Art**

In recent years, the information and communication field is being developed at a very fast pace, and various technologies that comprehensively combine electricity, electronics, communication, and semiconductor are continuously being developed. In addition, as electronic devices tend to be more mobile, research on wireless communication and wireless power transmission technologies is being actively conducted in the communication field. In particular, research on a method for wirelessly transmitting power to electronic devices is being actively conducted.

The wireless power transmission refers to wirelessly transmitting power through space using inductive coupling, capacitive coupling, or an electromagnetic field resonance structure such as an antenna without physical contact between a transmitter that supplies power and a receiver that receives power. The wireless power transmission is suitable for portable communication devices, electric vehicles, and the like that require a large-capacity battery. Since the contacts are not exposed, there is little risk of a short circuit, and a charging failure phenomenon in a wired method can be prevented.

Meanwhile, as interest in electric vehicles has rapidly increased in recent years, interest in building charging infrastructure is increasing. Various charging methods have already appeared, such as electric vehicle charging using home chargers, battery replacement, rapid charging devices, and wireless charging devices. A new charging business model has also begun to appear (see Korean Laid-open Patent Publication No. 2011-0042403). In addition, electric vehicles and charging stations that are being tested begin to stand out in Europe. In Japan, electric vehicles and charging stations are being piloted, led by automakers and power companies.

[Prior Art Document]

(Patent Document 1) Korean Laid-open Patent Publication No. 2011-0042403

**Disclosure of Invention**

**Technical Problem**

A wireless charging device used as a transceiver in a transportation means such as an electric vehicle is provided with a coil unit, a magnetic unit, and a shield unit, and the performance of the device varies depending on various variables such as the distance between them and each size and component.

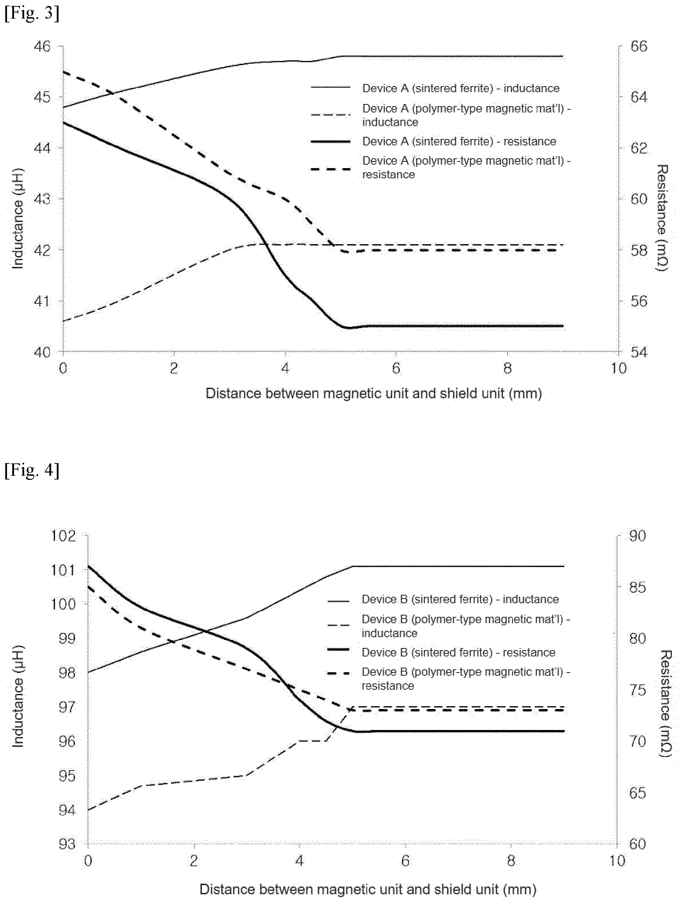

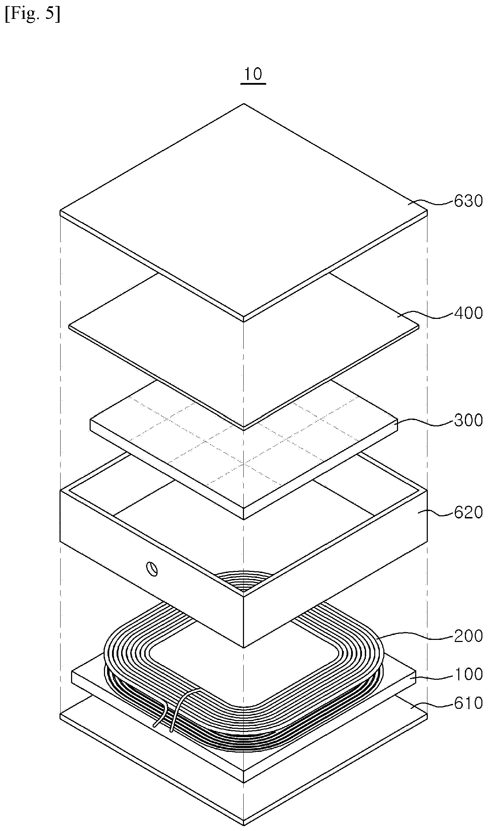

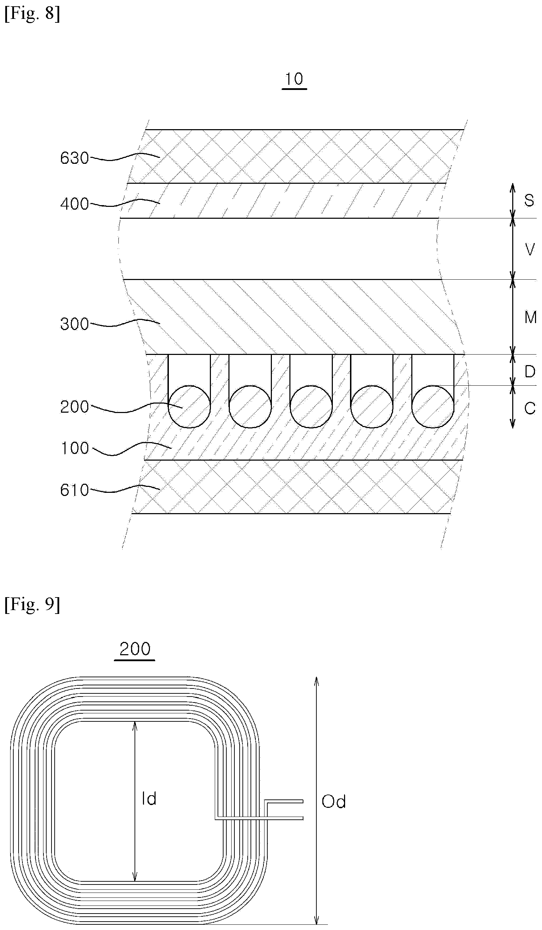

Referring to Figs. 5 and 8, as the distance (V) between the magnetic unit (300) and the shield unit (400) decreases, there is an advantage in that the overall thickness of the wireless charging device becomes thinner. As shown in Figs. 3 and 4, however, the inductance decreases and the resistance increases, so that the charging efficiency of the wireless charging device may decrease and heat generation may increase. On the other hand, as the distance between the magnetic unit and the shield unit increases, the inductance increases and the resistance decreases, whereby the charging efficiency of the wireless charging device is enhanced and heat generation decreases, whereas there is a problem in that the overall thickness of the wireless charging device becomes thicker.

In particular, as shown in Figs. 3 and 4, as the distance between the magnetic unit and the shield unit increases, the inductance and resistance do not constantly change, and the location where the inductance is maximum and the location where the resistance is minimum may not coincide. Thus, the device should be designed with these points taken into account.

As a result of research conducted by the present inventors, it has been discovered that if the distance between a magnetic unit and a shield unit is adjusted such that the Q factor calculated in consideration of inductance and resistance together has the maximum rate of increase, the wireless charging device has an appropriate thickness, high charging efficiency, and minimized heat generation. In addition, as a result of experiments on wireless charging devices of various specifications and materials, the present inventors have been able to formulate a specific formula for a preferred range of characteristics including the distance between a magnetic unit and a coil unit and a Q factor.

Accordingly, the object of the embodiments is to provide a wireless charging device in which such characteristics as the distance between a magnetic unit and a shield unit and a Q factor are formulated to a specific formula so as to have an appropriate thickness, high charging efficiency, and minimized heat generation, and a transportation means comprising the same.

**Solution to Problem**

According to an embodiment, there is provided a wireless charging device, which comprises a coil unit comprising a conductive wire; a magnetic unit disposed on the coil unit; and a shield unit disposed on the magnetic unit, wherein the following Relationship (1) is satisfied:

$$1.1 \leq [(\Delta Q1 - \Delta Q2) / Q] \times 100 \; ... \; (1)$$

Here, $\Delta Q1$ is $(Q - Qa) / \Delta d$, $\Delta Q2$ is $(Qb - Q) / \Delta d$, Q is the Q factor of the wireless charging device measured at a frequency of 85 kHz, Qa is the Q factor measured when the distance between the magnetic unit and the shield unit in the wireless charging device is further decreased by $\Delta d$ (mm), Qb is the Q factor measured when the distance between the magnetic unit and the shield unit in the wireless charging device is further increased by $\Delta d$ (mm), and the Q factor is calculated as $2 \times \pi \times f \times L / R$, wherein f is the frequency (kHz), L is the inductance ($\mu H$) of the coil unit, and R is the resistance (m$\Omega$) of the coil unit. Q, Qa, Qb, f, L, R, $\Delta Q1$, $\Delta Q2$, and $\Delta d$ are numerical values without respective units.
According to another embodiment, there is provided a transportation means comprising the wireless charging device according to an embodiment.

**Advantageous Effects of Invention**

As the wireless charging device according to the embodiment satisfies a specific formula in which such characteristics as the distance between the magnetic unit and the shield unit and the Q factor are taken into account, it can have an appropriate thickness, high charging efficiency, and minimized heat generation.
Accordingly, the wireless charging device according to the embodiment can be advantageously used in a transportation means such as electric vehicles that requires large-capacity power transmission between a transmitter and a receiver.

**Brief Description of Drawings**

Fig. 1 illustrates the concepts of Q, Qa, Qb, $\Delta d$, $\Delta Q1$, and $\Delta Q2$ in a curve of the Q factor with respect to the distance between a magnetic unit and a shield unit.
Figs. 2, 3, and 4 show changes in Q factor, inductance, and resistance with respect to the distance between the magnetic unit and the shield unit in Test Example 1, respectively.
Figs. 5, 6, and 7 are each an exploded perspective view, a perspective view, and a cross-sectional view of a wireless charging device according to an embodiment.
Fig. 8 is an enlarged cross-sectional view of a wireless charging device according to an embodiment.
Fig. 9 shows an example of a plan view of a coil unit.
Fig. 10 shows an example of a cross-sectional view of a transmitter and a receiver for wireless charging.
Fig. 11 shows a transportation means according to an embodiment.

<Explanation of Reference Numerals>

| | | | |
|---|---|---|---|
| 1: | transportation means | 10: | wireless charging device |
| 21: | receiver | 22: | transmitter |
| 30: | magnetic flux | | |
| 100: | support unit | 200: | coil unit |
| 300: | magnetic unit | 400: | shield unit |
| 600: | housing | 600: | lower housing |
| 600: | lateral housing | 600: | upper housing |
| Id: | inner dimension | Od: | outer dimension |
| C: | diameter of a conductive wire | | |
| D: | distance between a coil unit and a magnetic unit | | |

(continued)

M: thickness of a magnetic unit
S: thickness of a shield unit
V: distance between a shield unit and a magnetic unit

**Best Mode for Carrying out the Invention**

In the following description of the embodiments, in the case where an element is mentioned to be disposed "on" or "under" another element, it means not only that one element is directly formed "on" or "under" another element, but also that one element is indirectly disposed on or under another element with other element(s) interposed between them.

In this specification, the upper/lower relationship of the respective components is described with reference to the accompanying drawings for easy understanding. However, when an object is observed in a manner different from the drawing, it should be understood that the upper/lower relationship of the components varies depending on the direction of observation. In addition, for the sake of description, the sizes of individual elements in the appended drawings may be exaggeratedly depicted, and they may differ from the actual sizes.

Throughout the present specification, when a part is referred to as "comprising" an element, it is understood that other elements may be comprised, rather than other elements are excluded, unless specifically stated otherwise.

In addition, all numbers expressing the physical properties, dimensions, and the like of elements used herein are to be understood as being modified by the term "about" unless otherwise indicated.

In the present specification, a singular expression is understood to encompass a singular or plural expression, interpreted in context, unless otherwise specified.

**Wireless charging device**

Figs. 5, 6, and 7 are each an exploded perspective view, a perspective view, and a cross-sectional view of a wireless charging device according to an embodiment.

The wireless charging device (10) according to an embodiment of the present invention comprises a coil unit (200) comprising a conductive wire; a magnetic unit (300) disposed on the coil unit (200); and a shield unit (400) disposed on the magnetic unit (300). In addition, the wireless charging device (10) may further comprise a support unit (100) for supporting the coil unit (200) and a housing (610, 620, 630) for protecting the components.

**Embodiment using a Q factor of a wireless charging device**

According to an embodiment, the wireless charging device satisfies the following Relationship (1):

$$1.1 \leq [(\Delta Q1 - \Delta Q2) / Q] \times 100 \ ... \ (1)$$

Here, $\Delta Q1$ is (Q - Qa) / $\Delta$d, $\Delta Q2$ is (Qb - Q) / $\Delta$d, Q is the Q factor of the wireless charging device measured at a frequency of 85 kHz, Qa is the Q factor measured when the distance between the magnetic unit and the shield unit in the wireless charging device is further decreased by $\Delta$d (mm), Qb is the Q factor measured when the distance between the magnetic unit and the shield unit in the wireless charging device is further increased by $\Delta$d (mm), and the Q factor is calculated as $2 \times \pi \times f \times L / R$, wherein f is the frequency (kHz), L is the inductance ($\mu$H) of the coil unit, and R is the resistance (m$\Omega$) of the coil unit. Q, Qa, Qb, f, L, R, $\Delta Q1$, $\Delta Q2$, and $\Delta$d are numerical values without respective units.

Inductance ($\mu$H), resistance (m$\Omega$), and distance (mm), excluding the Q factor, among the characteristics used in Relationship (1) have their own units. However, numerical values alone without units are used in Relationship (1). Therefore, the calculated value in Relationship (1) does not have a unit as well.

In addition, in the present specification, it should be taken into account that the measured or calculated values of inductance, resistance, and Q factor may have slight errors in the measurement equipment or calculation process, for example, within about 0.5%.

The Q factor is also called a quality factor as is well known in the art, and it stands for quality according to a frequency of a current or a resonance frequency in a resonance circuit. Since the Q factor is calculated as a ratio of energy stored in a resonator and energy lost, the higher the Q factor, the better the resonance characteristics at a corresponding frequency. The Q factor may be calculated from inductance and resistance measured through the coil unit using an LCR meter at a specific frequency, and it is a value without a unit.

Fig. 8 is an enlarged cross-sectional view of a wireless charging device according to an embodiment. Referring to Fig. 8, the distance (V) between the magnetic unit (300) and the shield unit (400) may be the distance (V) between the surface of the magnetic unit (300) and the surface of the shield unit (400) facing each other. Thus, it may be the shortest distance between the magnetic unit (300) and the shield unit (400).

In addition, $\Delta d$ is not particularly limited, but it may be, for example, 0.1 mm or more, 0.3 mm or more, 0.5 mm or more, 1 mm or more, or 2.5 mm or more, and 3 mm or less, 2.5 mm or less, 2 mm or less, 1.5 mm or less, 1 mm or less, or 0.5 mm or less. Specifically, $\Delta d$ may be 0.1 mm to 3 mm, 0.3 mm to 2.5 mm, or 0.5 mm to 2 mm. As a more specific example, $\Delta d$ may be 0.5 mm, 1 mm, 1.5 mm, 2 mm, 3 mm, or 4 mm.

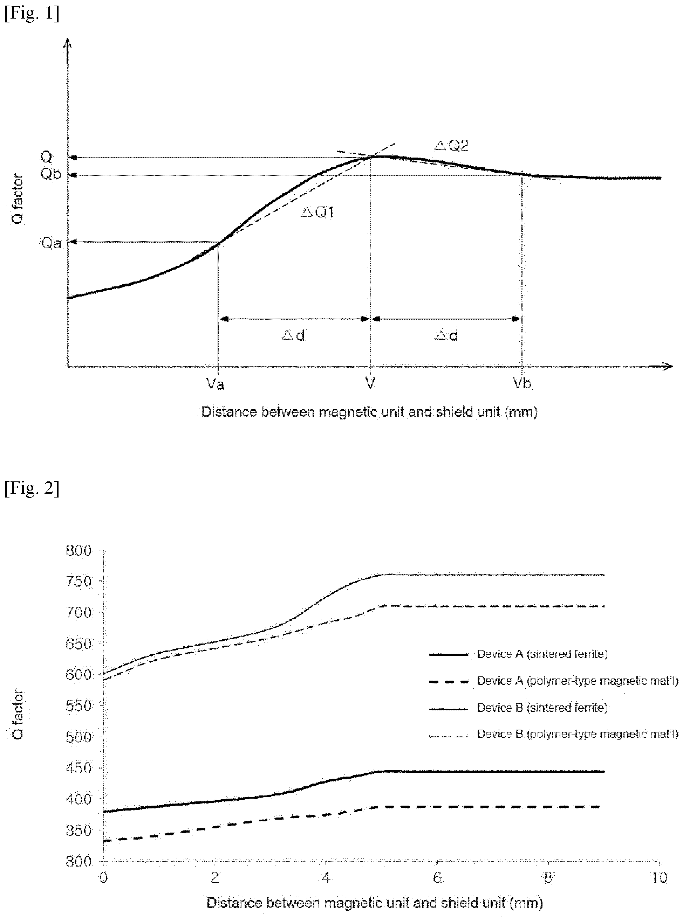

Fig. 1 illustrates the concepts of Q, Qa, Qb, $\Delta d$, $\Delta$Q1, and $\Delta$Q2 in a curve of the Q factor with respect to the distance between a magnetic unit and a shield unit. In the curve of Fig. 1, V is the distance (mm) between the magnetic unit and the shield unit, Va is a distance decreased by $\Delta d$ (mm) from the distance, and Vb is a distance increased by $\Delta d$ (mm) from the distance. Here, $\Delta$Q1 is the rate of change (slope of the curve) of the Q factor in the interval ($\Delta d$) between Va - V, and $\Delta$Q2 is the rate of change (slope of the curve) of the Q factor in the interval ($\Delta d$) between V - Vb.

Since the Q factor is a characteristic in which inductance and resistance are taken into account together, if the distance between the magnetic unit and the shield unit is adjusted such that the Q factor has the maximum rate of increase, the wireless charging device can have an appropriate thickness, high charging efficiency, and minimized heat generation. The location at which the Q factor has the maximum rate of increase as discussed above may be identified as the location at which the value obtained by subtracting $\Delta$Q2 from $\Delta$Q1 is maximized. Here, the overall level of the Q factor varies depending on the detailed components of the wireless charging device; thus, the value obtained by subtracting $\Delta$Q2 from $\Delta$Q1 may also vary significantly. However, if the value obtained by subtracting $\Delta$Q2 from $\Delta$Q1 is divided by the Q factor of the wireless charging device, an alternative normalization value may be derived. Accordingly, a desirable value range may be derived regardless of the detailed configuration of the device. According to the embodiment, this technical idea is presented through a specific formula, that is, Relationship (1).

If the calculated value of Relationship (1) is 1.1 or more, it has a significant technical effect in terms of the thickness, charging efficiency, and heat generation of the wireless charging device. If it is less than this value, for example, if it is 1.0 or less, the technical effect may be insignificant or rather deteriorated. For example, the calculated value of Relationship (1) may be 1.5 or more, 2.0 or more, 2.5 or more, 3.0 or more, 3.5 or more, 4.0 or more, 4.5 or more, or 5.0 or more. Meanwhile, the upper limit of the calculated value of Relationship (1) is not particularly limited. But the calculated value of Relationship (1) may be, for example, 20 or less, 10 or less, 8 or less, 7 or less, or 6 or less. Specifically, the calculated value in Relationship (1) may be 1.1 to 20, 1.1 to 10, 1.1 to 8, 1.1 to 7, or 1.1 to 6.

The wireless charging device may have a high Q factor in the vicinity of a standard frequency for wireless charging of an electric vehicle. The standard frequency for wireless charging of an electric vehicle may be less than 100 kHz, for example, 79 kHz to 90 kHz, specifically, 81 kHz to 90 kHz, more specifically, about 85 kHz. It is a band distinct from the frequency applied to mobile electronic devices such as cell phones.

The wireless charging device may have a Q factor of 300 or more at a frequency of 85 kHz. For example, the Q factor of the wireless charging device may be 350 or more, 400 or more, 430 or more, 450 or more, 500 or more, 550 or more, 600 or more, 620 or more, or 630 or more at a frequency of 85 kHz. In addition, the upper limit of the Q factor of the wireless charging device is not particularly limited, but the Q factor may be, for example, 1,000 or less, 900 or less, 800 or less, 700 or less, 600 or less, or 500 or less.

The Q factor of the wireless charging device may vary depending on the materials and arrangements of the respective components. For example, the Q factor of the wireless charging device may vary depending on whether the material of the magnetic unit is composed of a sintered ferrite material or a polymer-based magnetic material. In addition, since the inductance and resistance of the coil unit vary depending on the diameter of the conductive wire that constitutes the coil unit or the number of turns of the conductive wire, the Q factor may also vary accordingly.

**Embodiment using resistance of a coil unit**

According to another embodiment, the wireless charging device satisfies the following Relationship (2).

$$-1.1 \geq [(\Delta R1 - \Delta R2) / R] \times 100 \ ... \ (2)$$

Here, $\Delta$R1 is (R - Ra) / $\Delta d$, $\Delta$R2 is (Rb - R) / $\Delta d$, R is the resistance (m$\Omega$) of the coil unit measured at a frequency of 85 kHz, Ra is the resistance (m$\Omega$) measured when the distance between the magnetic unit and the shield unit is further decreased by $\Delta d$ (mm), and Rb is the resistance (m$\Omega$) measured when the distance between the magnetic unit and the shield unit is further increased by $\Delta d$ (mm). R, Ra, Rb, $\Delta$R1, $\Delta$R2, and $\Delta d$ are numerical values without respective units.

Resistance (m$\Omega$) and distance (mm) among the characteristics used in Relationship (2) have their own units.

However, numerical values alone without units are used in Relationship (2). Therefore, the calculated value in Relationship (2) does not have a unit as well.

In Relationship (2), Δd may be determined within the range exemplified in Relationship (1) above, and it may be 2 mm as a specific example.

When the resistance of the coil unit, which changes according to the distance between the magnetic unit and the shield unit, is represented as a curve, the resistance of the coil unit at a distance (V) between the magnetic unit and the shield unit, a distance (Va) decreased by Δd (mm), and a distance (Vb) increased by Δd (mm), respectively, may be referred to as R, Ra, and Rb. Here, ΔR1 is the rate of change (slope of the curve) of the resistance in the interval (Δd) between Va - V, and ΔR2 is the rate of change (slope of the curve) of the resistance in the interval (Δd) between V - Vb.

The resistance of the coil unit in a wireless charging device intensifies heat generation. Thus, when the distance between the magnetic unit and the shield unit is adjusted such that the resistance of the coil unit has the maximum rate of decrease, heat generation can be minimized while the wireless charging device has an appropriate thickness. The location at which the resistance of the coil unit has the maximum rate of decrease as discussed above may be identified as the location at which the value obtained by subtracting ΔR2 from ΔR1 is minimized. Here, the level of the resistance of the coil unit varies depending on the detailed components of the wireless charging device; thus, the value obtained by subtracting ΔR2 from ΔR1 may also vary depending on the devices. However, if the value obtained by subtracting ΔR2 from ΔR1 is divided by the resistance of the coil unit, an alternative normalization value may be derived. Accordingly, a desirable value range may be derived regardless of the detailed configuration of the device. According to the embodiment, this technical idea is presented through a specific formula, that is, Relationship (2).

If the calculated value of Relationship (2) is -1.1 or less, it has a significant technical effect in terms of the thickness and heat generation of the wireless charging device. If it is greater than this value, for example, if it is -1.0 or more, the technical effect may be insignificant or rather deteriorated. For example, the calculated value of Relationship (2) may be -1.5 or less, -2.0 or less, -2.5 or less, -3.0 or less, -3.5 or less, - 4.0 or less, -4.5 or less, or -5.0 or less. Meanwhile, the lower limit of the calculated value of Relationship (2) is not particularly limited. But the calculated value of Relationship (2) may be, for example, -20 or more, -10 or more, -8 or more, -7 or more, or -6 or more. Specifically, the calculated value in Relationship (2) may be -20 to -1.1, -10 to -1.1, -8 to -1.1, -7 to -1.1, or -6 to -1.1.

The resistance of the coil unit may be 40 mΩ or more, 50 mΩ or more, 60 mΩ or more, or 70 mΩ or more, and 100 mΩ or less, 90 mΩ or less, 80 mΩ or less, or 70 mΩ or less at a frequency of 85 kHz. Specifically, it may be 45 mΩ to 75 mΩ or 65 mΩ to 95 mΩ, but it is not limited thereto.

**Embodiment using inductance of a coil unit**

According to still another embodiment, the wireless charging device satisfies the following Relationship (3).

$$0.1 \leq [(L1 - \Delta L2) / L] \times 100 \; ... \; (3)$$

Here, ΔL1 is (L - La) / Δd, ΔL2 is (Lb - L) / Δd, L is the inductance (μH) of the coil unit measured at a frequency of 85 kHz, La is the inductance (μH) measured when the distance between the magnetic unit and the shield unit is further decreased by Δd (mm), and Lb is the inductance (μH) measured when the distance between the magnetic unit and the shield unit is further increased by Δd (mm). L, La, Lb, ΔL1, ΔL2, and Δd are numerical values without respective units.

Inductance (μH) and distance (mm) among the characteristics used in Relationship (3) have their own units. However, numerical values alone without units are used in Relationship (3). Therefore, the calculated value in Relationship (3) does not have a unit as well.

In Relationship (3), Δd may be determined within the range exemplified in Relationship (1) above, and it may be 2 mm as a specific example.

When the inductance of the coil unit, which changes according to the distance between the magnetic unit and the shield unit, is represented as a curve, the inductance of the coil unit at a distance (V) between the magnetic unit and the shield unit, a distance (Va) decreased by Δd (mm), and a distance (Vb) increased by Δd (mm), respectively, may be referred to as L, La and Lb. Here, ΔL1 is the rate of change (slope of the curve) of the inductance in the interval (Δd) between Va - V, and ΔL2 is the rate of change (slope of the curve) of the inductance in the interval (Δd) between V - Vb.

The inductance of the coil unit in a wireless charging device is generally proportional to the charging efficiency. Thus, when the distance between the magnetic unit and the shield unit is adjusted such that the inductance of the coil unit has the maximum rate of increase, charging efficiency can be maximized while the wireless charging device has an appropriate thickness. The location at which the inductance of the coil unit has the maximum rate of increase as discussed above may be identified as the location at which the value obtained by subtracting ΔL2 from ΔL1 is maximized. Here, the level of the inductance of the coil unit varies depending on the detailed components of the wireless charging device; thus, the value obtained by subtracting ΔL2 from ΔL 1 may also vary depending on the devices. However, if the value obtained by subtracting ΔL2 from ΔL 1 is divided by the inductance of the coil unit, an alternative normalization value may be derived. Accordingly, a desirable value range may be derived regardless of the detailed configuration of the device. According to the embodiment, this technical idea is presented through a specific formula, that is, Relationship (3).

If the calculated value of Relationship (3) is 0.1 or more, it has a significant technical effect in terms of the thickness and charging efficiency of the wireless charging device. If it is less than this value, for example, if it is 0 or less, the technical effect may be insignificant or rather deteriorated. For example, the calculated value of Relationship (3) may be 0.2 or more, 0.3 or more, 0.4 or more, 0.5 or more, 0.6 or more, 0.7 or more, 0.8 or more, or 0.9 or more. Meanwhile, the upper limit of the calculated value of Relationship (3) is not particularly limited. But the calculated value of Relationship (3) may be, for example, 5 or less, 3 or less, 2 or less, 1.5 or less, or 1.3 or less. Specifically, the calculated value in Relationship (3) may be 0.1 to 5, 0.1 to 3, 0.1 to 2, 0.1 to 1.5, or 0.1 to 1.3.

The inductance of the coil unit may be 30 μH or more, 40 μH or more, 45 μH or more, 50 μH or more, 70 μH or more, or 90 μH or more, and 120 μH or less, 110 μH or less, 100 μH or less, 80 μH or less, 60 μH or less, or 50 μH or less at a frequency of 85 kHz. Specifically, it may be 30 μH to 60 μH or 70 μH to 120 μH, but it is not particularly limited thereto.

As a specific example, the coil unit may have an inductance of 45 μH or more and a resistance of 80 mΩ or less at a frequency of 85 kHz, and the wireless charging device may have a Q factor of 350 or more at a frequency of 85 kHz. However, the inductance and resistance of the coil unit may vary depending on the type of the coil unit and the distance between the magnetic unit and the shield unit, and they are not limited to the ranges exemplified above.

**Distance between components**

Fig. 8 is an enlarged cross-sectional view of a wireless charging device according to an embodiment.

Referring to Fig. 8, the distance (V) between the magnetic unit (300) and the shield unit (400) may be adjusted within a certain range. For example, as the distance (V) between the magnetic unit (300) and the shield unit (400) decreases, there is an advantage in that the overall thickness of the wireless charging device becomes thinner. As shown in Figs. 3 and 4, however, the inductance decreases and the resistance increases, so that the charging efficiency of the wireless charging device may decrease and heat generation may increase. On the other hand, as the distance (V) between the magnetic unit (300) and the shield unit (400) increases, the inductance increases and the resistance decreases, whereby the charging efficiency of the wireless charging device is enhanced and heat generation decreases, whereas there is a problem in that the overall thickness of the wireless charging device becomes thicker.

Specifically, the distance between the magnetic unit and the shield unit may be 1 mm or more, 2 mm or more, 3 mm or more, 3.5 mm or more, 4 mm or more, 4.5 mm or more, or 5 mm or more. In addition, the distance between the magnetic unit and the shield unit may be 9 mm or less, 7 mm or less, 6.5 mm or less, 6 mm or less, 5.5 mm or less, or 5 mm or less. For example, the distance between the magnetic unit and the shield unit may be 1 mm to 9 mm, 3 mm to 7 mm, 3.5 mm to 6.5 mm, 4 mm to 6 mm, 4.5 mm to 5.5 mm, 5 mm to 7 mm, or 3 mm to 5 mm. More specifically, the distance between the magnetic unit and the shield unit may be 4 mm to 6 mm.

In addition, the distance (D) between the coil unit (200) and the magnetic unit (300) may be adjusted within a certain range. For example, as the magnetic unit is spaced apart from the coil unit, the inductance decreases, thereby reducing the Q factor of the wireless charging device, which causes a decrease in charging efficiency and an increase in heat generation. On the other hand, as the distance between the coil unit and the magnetic unit is closer, the inductance is increased, whereas it is difficult to assemble the coil and the magnetic body that are in close contact, and it may be vulnerable to external impact.

For example, the distance between the coil unit and the magnetic unit may be greater than 0 mm, 1 mm or more, 1.5 mm or more, 2 mm or more, or 2.5 mm or more. In addition, the distance between the coil unit and the magnetic unit may be 10 mm or less, 5 mm or less, 4 mm or less, 3.5 mm or less, 3 mm or less, or 2.5 mm or less. For example, the distance between the coil unit and the magnetic unit may be 1 mm to 5 mm, 1 mm to 3 mm, 1.5 mm to 4 mm, 1.5 mm to 3.5 mm, 1.5 mm to 2.5 mm, 2 mm to 3.5 mm, or 2.5 mm to 3.5 mm. More specifically, the distance between the coil unit and the magnetic unit may be 1 mm to 3 mm.

**Coil unit**

The coil unit comprises a conductive wire. The conductive wire comprises a conductive material. For example, the conductive wire may comprise a conductive metal. Specifically, the conductive wire may comprise at least one metal selected from the group consisting of copper, nickel, gold, silver, zinc, and tin.

The conductive wire may be a litz wire in which a plurality of fine strands are twisted and then covered. For example, the litz wire may be composed of 10 or more, 100 or more, or 500 or more fine strands. Specifically, it may be composed of 500 to 1,500 fine strands.

In addition, the conductive wire may be covered with an insulating sheath. For example, the insulating sheath may comprise an insulating polymer resin. Specifically, the insulating sheath may comprise a polyvinyl chloride (PVC) resin, a polyethylene (PE) resin, a Teflon resin, a silicone resin, a polyurethane resin, or the like.

The conductive wire may be wound in the form of a planar coil. Specifically, the planar coil may comprise a planar spiral coil. In addition, the planar shape of the coil unit may be a circle, an ellipse, a polygon, or a polygonal shape with rounded corners, but it is not particularly limited thereto.

Fig. 9 shows an example of a plan view of a coil unit. Referring to Fig. 9, the coil unit (200) may have a hollow shape on a plane; thus, it may have an outer dimension (or outer diameter) (Od) and an inner dimension (or inner diameter) (Id). For example, the outer dimension and the inner dimension may refer to the outer diameter and the inner diameter, respectively, when the coil unit has a circular donut shape on a plane. When the coil unit has a quadrangular donut shape on a plane, they may refer to the length of the side of the outer quadrangular shape and the length of the side of the empty inner quadrangular area.

Specifically, the outer dimension (Od) of the coil unit (200) may be 50 mm to 1,000 mm, 100 mm to 500 mm, 100 mm to 300 mm, 200 mm to 800 mm, 300 mm to 400 mm, or 500 mm to 1,000 mm. In addition, the inner dimension (Id) of the coil unit may be 5 mm to 300 mm, 10 mm to 200 mm, 100 mm to 200 mm, 150 mm to 250 mm, or 20 mm to 150 mm.

The number of turns of the conductive wire wound in the planar coil may be 5 to 50 times, 10 to 30 times, 5 to 30 times, 15 to 50 times, or 20 to 50 times.

As a specific example, the coil unit is a planar spiral coil in which the conductive wire is wound 5 to 15 times and may have an outer dimension of 300 mm to 400 mm and an inner dimension of 150 mm to 250 mm.

Within the preferred dimensions and specification ranges of the planar coil as described above, it can be appropriately used in the fields such as electric vehicles that require large-capacity power transmission.

The distance between the conductive wires in the planar coil shape may be 0.1 cm to 1 cm, 0.1 cm to 0.5 cm, or 0.5 cm to 1 cm.

Referring to Fig. 8, the diameter (C) of the conductive wire that constitutes the coil unit (200) may also be adjusted within a certain range. For example, the diameter of the conductive wire may be 1 mm or more, 2 mm or more, 3 mm or more, 4 mm or more, or 5 mm or more. In addition, the diameter of the conductive wire may be 10 mm or less, 8 mm or less, 7 mm or less, 6 mm or less, or 5 mm or less. Specifically, the diameter of the conductive wire may be 1 mm to 10 mm or 2 mm to 8 mm. More specifically, the diameter of the conductive wire may be 3 mm to 7 mm. As a specific example, the coil unit may be one in which a conductive wire having a diameter of 3 mm to 7 mm is wound 5 to 20 times.

**Magnetic unit**

The magnetic unit is disposed on the coil unit to increase wireless charging efficiency.

The material of the magnetic unit is not particularly limited and may be a magnetic material used in a wireless charging device.

For example, the magnetic unit may comprise at least one of a ferrite magnetic material and a polymer-type magnetic material.

As an example, the magnetic unit may comprise a ferrite-based magnetic material. For example, the specific chemical formula of the ferrite-based magnetic material may be represented by $MOFe_2O_3$ (wherein M is one or more divalent metal elements such as Mn, Zn, Cu, and Ni). Specifically, the magnetic unit preferably comprises a sintered ferrite-based magnetic material from the viewpoint of such magnetic characteristics as magnetic permeability. The sintered magnetic material may be prepared in the form of a sheet or a block by mixing raw materials, followed by calcining, pulverizing, mixing with a binder resin, molding, and sintering. Specifically, the ferrite-based magnetic material may comprise a Ni-Zn-based, Mg-Zn-based, or Mn-Zn-based ferrite. In particular, Mn-Zn-based ferrite may exhibit high magnetic permeability, low magnetic permeability loss, and high saturation magnetic flux density over a temperature range of room temperature to 100°C or higher at a frequency of 85 kHz.

As another example, the magnetic unit may comprise a polymer resin and a magnetic powder dispersed in the polymer resin. As a result, since the magnetic powder is coupled with each other by the polymer resin, the magnetic unit may have fewer defects over a large area and less damage caused by an impact. The magnetic powder may be an oxide-based magnetic powder, a metal-based magnetic powder, or a mixed powder thereof. For example, the oxide-based magnetic powder may be a ferrite-based powder, specifically, a Ni-Zn-based, Mg-Zn-based, or Mn-Zn-based ferrite powder. In addition, the metal-based magnetic powder may be a Fe-Si-Al alloy magnetic powder or a Ni-Fe alloy magnetic powder, more specifically, a sendust powder or a permalloy powder. In addition, the magnetic powder may be a nanocrystalline magnetic powder. For example, it may be a Fe-based nanocrystalline magnetic powder. Specifically, it may be a Fe-Si-Al-based nanocrystalline magnetic powder, a Fe-Si-Cr-based nanocrystalline magnetic powder, or a Fe-Si-B-Cu-Nb-based nanocrystalline magnetic powder. The magnetic powder may have an average particle diameter in the range of 3 nm to 1 mm, 1 μm to 300 μm, 1 μm to 50 μm, or 1 μm to 10 μm. The magnetic unit may comprise the magnetic powder in an amount of 10% by weight or more, 50% by weight or more, 70% by weight or more, or 85% by weight or more. For example, the magnetic unit may comprise the magnetic powder in an amount of 10% by weight to 99% by weight, 10% by weight to 95% by weight, or 50% by weight to 95% by weight. Examples of the polymer resin include a polyimide resin, a polyamide resin, a polycarbonate resin, an acrylonitrilebutadiene-styrene (ABS) resin, a polypropylene resin, a polyethylene resin, a polystyrene resin, a polyphenylsulfide (PSS) resin, a polyether ether ketone (PEEK) resin, a silicone resin, an acrylic resin, a polyurethane resin, a polyester resin, an isocyanate resin, and an epoxy resin, but it is not limited thereto.

The magnetic unit may have a sheet shape or a block shape. Referring to Fig. 8, the magnetic unit (300) may have a thickness (M) of 0.5 mm to 10 mm, specifically, 1 mm to 9 mm, 2 mm to 8 mm, or 3 mm to 7 mm. In addition, the magnetic unit may have an area of 200 $cm^2$ or more, 400 $cm^2$ or more, or 600 $cm^2$ or more, and 10,000 $cm^2$ or less. In addition, the magnetic unit may be configured by combining a plurality of unit magnetic materials. In such an event, the area of the individual unit magnetic materials may be 60 $cm^2$ or more, 90 $cm^2$, or 95 $cm^2$ to 900 $cm^2$.

The magnetic unit may have a shape extending in a direction parallel to the coil unit. For example, the magnetic unit may have a flat sheet shape, the coil unit may have a planar coil shape, and the magnetic unit and the coil unit may be disposed parallel to each other. The planar shape of the magnetic unit may be a polygon, a polygon with rounded corners, or a circular shape. For example, when the magnetic unit has a shape of a square sheet, the length of one side may be 100 mm to 700 mm, 200 mm to 500 mm, or 300 mm to 350 mm. As a specific example, the magnetic unit may be a rectangular sheet having a side length of 300 mm to 350 mm and a thickness of 3 mm to 7 mm.

The magnetic unit may have magnetic characteristics of a certain level in the vicinity of a standard frequency for wireless charging of an electric vehicle. The magnetic permeability of the magnetic unit at 85 kHz may vary depending on the material. It may be 5 or more, for example, 5 to 150,000 and may specifically be in the range of 5 to 300, 500 to 3,500, or 10,000 to 150,000, depending on the specific material. In addition, the magnetic permeability loss of the magnetic unit at 85 kHz may vary depending on the material. It may be 0 or more, for example, 0 to 50,000 and may specifically be 0 to 1,000, 1 to 100, 100 to 1,000, or 5,000 to 50,000, depending on the specific material.

**Shield unit**

The shield unit is disposed on the magnetic unit to suppress electromagnetic interference (EMI) that may be generated by the leakage of electromagnetic waves to the outside through electromagnetic shielding.

The shield unit may be disposed to be spaced apart from the coil unit by a predetermined interval. For example, the spaced distance between the shield unit and the coil unit may be 10 mm or more or 15 mm or more, specifically, 10 mm to 30 mm or 10 mm to 20 mm.

The shield unit may comprise a metal. Specifically, the shield unit may be a metal plate, but it is not particularly limited thereto. As a specific example, the material of the shield unit may be aluminum. Other metals or alloy materials having an electromagnetic wave shielding capability may be used.

Referring to Fig. 8, the shield unit (400) may have a thickness (S) of 0.2 mm to 10 mm, 0.5 mm to 5 mm, or 1 mm to 3 mm. In addition, the shield unit may have an area of 200 $cm^2$ or more, 400 $cm^2$ or more, or 600 $cm^2$ or more.

The shield unit may have a shape extending in a direction parallel to the magnetic unit. For example, the magnetic unit and the shield unit may have a flat sheet shape and may be disposed parallel to each other. The planar shape of the shield unit may be a polygon, a polygon with rounded corners, or a circular shape. For example, when the shield unit has a shape of a square sheet, the length of one side may be 100 mm to 700 mm, 200 mm to 500 mm, or 300 mm to 400 mm. As a specific example, the shield unit may be a rectangular sheet having a side length of 300 mm to 400 mm and a thickness of 1 mm to 3 mm.

**Other components**

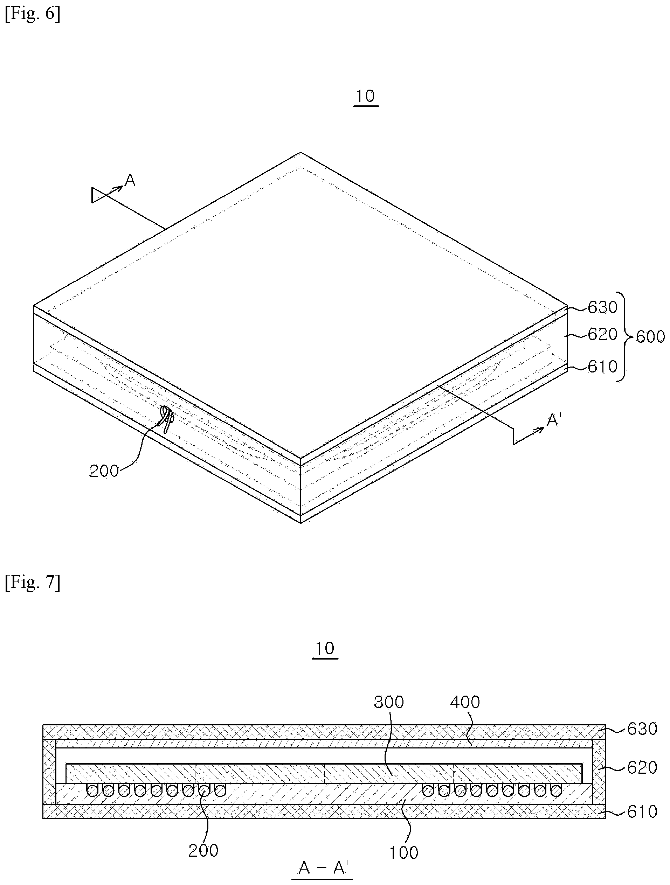

Referring to Figs. 5 and 7, the wireless charging device (10) may further comprise a support unit (100) for supporting the coil unit (200). The support unit may have a flat plate structure or a structure in which a groove is formed in compliance with a coil shape to fix the coil unit. For example, the support unit (100) may be a coil tray.

In addition, the wireless charging device (10) according to an embodiment may further comprise a spacer for securing a space between the shield unit (400) and the magnetic unit (300). The material and structure of the spacer may be a material and structure of a conventional spacer used in a wireless charging device.

The wireless charging device (10) according to an embodiment may further comprise a housing (600) for protecting the components described above. For example, the housing may have a configuration in which a lower housing (610), a lateral housing (620), and an upper housing (630) are combined, but it is not particularly limited thereto.

The housing allows such components as the coil unit, the shield unit, and the magnetic unit to be properly disposed and assembled. The material and structure of the housing may be a material and structure of a conventional housing used in a wireless charging device. For example, the housing may be manufactured using a plastic material having excellent durability.

## Transportation means

The wireless charging device can be advantageously used in a transportation means such as electric vehicles that requires large-capacity power transmission between a transmitter and a receiver.

In addition, the wireless charging device may be applied to a station (or charging station) that transmits wireless power in response to the transportation means. That is, the station according to an embodiment may also comprise a wireless charging device having the configuration and characteristics as described above.

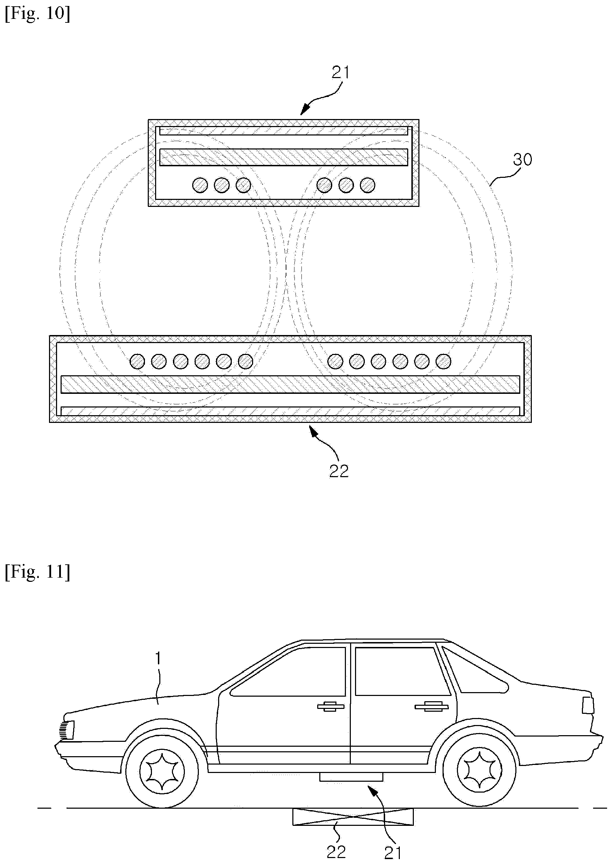

Fig. 10 shows an example of a cross-sectional view of a receiver (21) and a transmitter (22) for wireless charging. The receiver (21) and the transmitter (22) each have the same structure as the wireless charging device according to the embodiment described above. When power is applied to the transmitter (22) during wireless charging, power induced by the magnetic flux (30) is generated in the receiver (21), and wireless power transmission is performed.

Fig. 11 shows an electric vehicle, specifically, an electric vehicle provided with a wireless charging device. Since it is provided with a wireless charging device on its lower side, it may be charged wirelessly in a parking area equipped with a wireless charging system for an electric vehicle.

Referring to Fig. 11, the transportation means (1) according to an embodiment comprises a wireless charging device according to the embodiment as a receiver (21). The wireless charging device may serve as a receiver for wireless charging of the transportation means (1) and may receive power from a transmitter (22) for wireless charging.

The transportation means according to an embodiment comprises a wireless charging device, wherein the wireless charging device comprises a coil unit comprising a conductive wire; a magnetic unit disposed on the coil unit; and a shield unit disposed on the magnetic unit, wherein the following Relationship (1):

$$1.1 \leq [(\Delta Q1 - \Delta Q2) / Q] \times 100 \ ... \ (1)$$

Here, $\Delta Q1$ is $(Q - Qa) / \Delta d$, $\Delta Q2$ is $(Qb - Q) / \Delta d$, Q is the Q factor of the wireless charging device measured at a frequency of 85 kHz, Qa is the Q factor measured when the distance between the magnetic unit and the shield unit in the wireless charging device is further decreased by $\Delta d$ (mm), Qb is the Q factor measured when the distance between the magnetic unit and the shield unit in the wireless charging device is further increased by $\Delta d$ (mm), and the Q factor is calculated as $2 \times \pi \times f \times L / R$, wherein f is the frequency (kHz), L is the inductance ($\mu$H) of the coil unit, and R is the resistance (m$\Omega$) of the coil unit. Q, Qa, Qb, f, L, R, $\Delta Q1$, $\Delta Q2$, and $\Delta d$ are numerical values without respective units.

The configuration and characteristics of each component of the wireless charging device adopted in the transportation means are as described above. In addition, the wireless charging device adopted in the transportation means has a value of Relationship (1) of 1.1 or more; thus, possible advantageous effects may be applied in the same manner.

The transportation means may further comprise a battery for receiving power from the wireless charging device. The wireless charging device may receive power wirelessly and transmit it to the battery, and the battery may supply power to the driving system of the electric vehicle. The battery may be charged by power transmitted from the wireless charging device or other additional wired charging devices.

In addition, the transportation means may further comprise a signal transmitter for transmitting information about the charging to the transmitter of the wireless charging system. The information about such charging may be charging efficiency such as charging speed, charging state, and the like.

## Mode for the Invention

Hereinafter, the embodiments will be described with more specific examples, but the scope of the embodiment is not limited to this scope.

## Manufacture example of a wireless charging device

Figs. 5, 6, and 7 are each an exploded perspective view, a perspective view, and a cross-sectional view of a wireless charging device according to still another embodiment. A wireless charging device was manufactured as shown in these drawings.

## Device A

A coil tray was used as a support unit (100), and a coil unit (200) was accommodated and fixed in the groove of the coil tray. Referring to Fig. 9, the coil unit (200) was prepared as a planar spiral coil having a square shape as a whole with rounded corners having an external dimension (Od) of 320 mm × 320 mm and an internal dimension (Id) of 160 mm × 160 mm, in which a conductive wire (litz wire composed of 1,000 strands) with a diameter of 5 mm was wound 9 times.

A magnetic unit (300) was prepared to have a dimension of 320 mm × 320 mm × 5 mm (width × length × thickness), and the material of the magnetic unit was a sintered ferrite material or a polymer-type magnetic material. First, for the sintered ferrite material, a ferrite slurry was molded into a sheet form and sintered to obtain 16 ferrite units of 80 mm × 80 mm × 5 mm (width × length × thickness), which were then combined to prepare the magnetic unit of 320 mm × 320 mm × 5 mm (width × length × thickness). In addition, for the polymer-type magnetic material, a mold capable of forming a shape having a corresponding dimension (320 mm × 320 mm × 5 mm) was first manufactured, and a magnetic powder slurry was then injected into the mold using an injection molding machine to obtain the magnetic unit.

As a shield unit (400), an aluminum plate having a dimension of 350 mm × 350 mm × 2 mm (width × length × thickness) was used.

**Device B**

Referring to Fig. 9, a wireless charging device was prepared in the same manner as in Device A, except that the coil unit (200) was prepared as a planar spiral coil having a square shape as a whole with rounded corners having an external dimension (Od) of 320 mm × 320 mm and an internal dimension (Id) of 125 mm × 125 mm, in which a conductive wire (litz wire composed of 1,000 strands) with a diameter of 5 mm was wound 16 times.

**Device C**

A coil tray was used as a support unit (100), and a coil unit (200) was accommodated and fixed in the groove of the coil tray. Referring to Fig. 9, the coil unit (200) was prepared as a planar spiral coil having a rectangular shape as a whole with rounded corners having an external dimension (Od) of 675 mm × 534 mm and an internal dimension (Id) of 300 mm × 160 mm, in which a conductive wire (litz wire composed of 1,000 strands) with a diameter of 5 mm was wound 16 times.

A ferrite slurry was molded into a sheet form and sintered to obtain 16 ferrite units having a thickness of 5 mm, which were then combined to prepare the magnetic unit (300) of 675 mm × 534 mm × 5 mm (width × length × thickness).

As a shield unit (400), an aluminum plate having a dimension of 675 mm × 534 mm × 2 mm (width × length × thickness) was used.

**Test Example 1: Changes in characteristics according to the distance between the coil unit and the magnetic unit**

In the wireless charging devices (Device A or B) prepared above, referring to Fig. 8, the distance (D) between the coil unit and the magnetic unit was fixed at 2 mm, and the distance (V) between the magnetic unit and the shield unit was varied in which the inductance (L) and resistance (R) of the coil unit at a frequency (f) of 85 kHz and a voltage of 5 V were measured using an LCR meter, from which the Q factor (Q) was calculated. The results are shown in Table 1 below and Figs. 2 to 4.

[Table 1]

| Magnetic unit | Distance (mm) between magnetic unit and shield unit | Device A | | | Device B | | |
|---|---|---|---|---|---|---|---|
| | | Inductance (μH) | Resistance (mΩ) | Q factor | Inductance (μH) | Resistance (mΩ) | Q factor |
| Sintered ferrite | 0.0 | 44.8 | 63.0 | 379.59 | 98.0 | 87.0 | 601.29 |
| | 0.5 | 45.0 | 62.5 | 383.94 | 98.3 | 85.0 | 617.71 |
| | 1.0 | 45.1 | 62.0 | 388.30 | 98.6 | 83.0 | 634.13 |
| | 1.5 | 45.2 | 61.5 | 392.64 | 98.9 | 82.0 | 643.84 |
| | 2.0 | 45.4 | 61.0 | 396.99 | 99.1 | 81.0 | 653.56 |
| | 2.5 | 45.5 | 60.5 | 401.34 | 99.4 | 80.0 | 663.28 |
| | 3.0 | 45.6 | 60.0 | 405.69 | 99.6 | 79.0 | 672.99 |
| | 3.5 | 45.7 | 58.5 | 416.83 | 100.0 | 76.5 | 698.62 |
| | 4.0 | 45.7 | 57.0 | 427.98 | 100.4 | 74.0 | 724.24 |
| | 4.5 | 45.7 | 56.0 | 435.62 | 100.8 | 72.0 | 747.32 |
| | 5.0 | 45.8 | 55.0 | 444.51 | 101.1 | 71.0 | 760.10 |
| | 5.5 | 45.8 | 55.0 | 444.51 | 101.1 | 71.0 | 760.10 |
| | 6.0 | 45.8 | 55.0 | 444.51 | 101.1 | 71.0 | 760.10 |
| | 6.5 | 45.8 | 55.0 | 444.51 | 101.1 | 71.0 | 760.10 |
| | 7.0 | 45.8 | 55.0 | 444.51 | 101.1 | 71.0 | 760.10 |
| | 7.5 | 45.8 | 55.0 | 444.51 | 101.1 | 71.0 | 760.10 |
| | 8.0 | 45.8 | 55.0 | 444.51 | 101.1 | 71.0 | 760.10 |
| | 8.5 | 45.8 | 55.0 | 444.51 | 101.1 | 71.0 | 760.10 |
| | 9.0 | 45.8 | 55.0 | 444.51 | 101.1 | 71.0 | 760.10 |
| | 9.5 | 45.8 | 55.0 | 444.51 | 101.1 | 71.0 | 760.10 |
| | 10.0 | 45.8 | 55.0 | 444.51 | 101.1 | 71.0 | 760.10 |
| Polymer-type | 0.0 | 40.6 | 65.0 | 333.42 | 94.0 | 85.0 | 590.32 |
| | 0.5 | 40.8 | 64.5 | 337.69 | 94.4 | 83.0 | 607.20 |

(continued)

| Magnetic unit | Distance (mm) between magnetic unit and shield unit | Device A | | | Device B | | |
|---|---|---|---|---|---|---|---|
| | | Inductance (μH) | Resistance (mΩ) | Q factor | Inductance (μH) | Resistance (mΩ) | Q factor |
| magnetic material | 1.0 | 41.0 | 64.0 | 341.97 | 94.7 | 81.0 | 624.08 |
| | 1.5 | 41.3 | 63.3 | 348.36 | 94.8 | 80.0 | 632.71 |
| | 2.0 | 41.5 | 62.5 | 354.75 | 94.9 | 79.0 | 641.33 |
| | 2.5 | 41.8 | 61.8 | 361.14 | 94.9 | 78.0 | 649.96 |
| | 3.0 | 42.0 | 61.0 | 367.53 | 95.0 | 77.0 | 658.58 |
| | 3.5 | 42.1 | 60.5 | 371.04 | 95.5 | 76.0 | 670.92 |
| | 4.0 | 42.1 | 60.0 | 374.55 | 96.0 | 75.0 | 683.26 |
| | 4.5 | 42.1 | 59.0 | 380.90 | 96.0 | 74.0 | 692.50 |
| | 5.0 | 42.1 | 58.0 | 387.47 | 97.0 | 73.0 | 709.30 |
| | 5.5 | 42.1 | 58.0 | 387.47 | 97.0 | 73.0 | 709.30 |
| | 6.0 | 42.1 | 58.0 | 387.47 | 97.0 | 73.0 | 709.30 |
| | 6.5 | 42.1 | 58.0 | 387.47 | 97.0 | 73.0 | 709.30 |
| | 7.0 | 42.1 | 58.0 | 387.47 | 97.0 | 73.0 | 709.30 |
| | 7.5 | 42.1 | 58.0 | 387.47 | 97.0 | 73.0 | 709.30 |
| | 8.0 | 42.1 | 58.0 | 387.47 | 97.0 | 73.0 | 709.30 |
| | 8.5 | 42.1 | 58.0 | 387.47 | 97.0 | 73.0 | 709.30 |
| | 9.0 | 42.1 | 58.0 | 387.47 | 97.0 | 73.0 | 709.30 |
| | 9.5 | 42.1 | 58.0 | 387.47 | 97.0 | 73.0 | 709.30 |
| | 10.0 | 42.1 | 58.0 | 387.47 | 97.0 | 73.0 | 709.30 |

In addition, the values of Relationships (1) to (3) were calculated based on these measurement data. The results are shown in Tables 2 to 7.

$$\text{Calculated value of Relationship (1)} = [(\Delta Q1 - \Delta Q2) / Q] \times 100$$

$$\text{Calculated value of Relationship (2)} = [(\Delta R1 - \Delta R2) / R] \times 100$$

$$\text{Calculated value of Relationship (3)} = [(\Delta L1 - \Delta L2) / L] \times 100$$

Here,

$$\Delta Q1 = (Q - Qa) / \Delta d, \Delta Q2 = (Qb - Q) / \Delta d,$$

$$\Delta R1 = (R - Ra) / \Delta d, \Delta R2 = (Rb - R) / \Delta d,$$

$$\Delta L1 = (L - La) / \Delta d, \Delta L2 = (Lb - L) / \Delta d,$$

Qa, Ra, and La are each Q, R, and L when the distance between the magnetic unit and the shield unit is further decreased by Δd,
[0110] Qb, Rb, and Lb are each Q, R, and L when the distance between the magnetic unit and the shield unit is further increased by Δd, and

$$\Delta d = 2.0 \text{ mm.}$$

[Table 2]

| Calculation of Relationship (1) using Q factor for Device A (Δd = 2 mm) | | | | | | | |
|---|---|---|---|---|---|---|---|
| Magnetic unit | Distance (mm) between magnetic unit and shield unit | Qa | Q | Qb | ΔQ1 | ΔQ2 | Calculated value of Relationship (1) |
| Sintered ferrite | 2.0 | 379.59 | 396.99 | 427.98 | 8.70 | 15.49 | -1.71 |
| | 2.5 | 383.94 | 401.34 | 435.62 | 8.70 | 17.14 | -2.10 |
| | 3.0 | 388.30 | 405.69 | 444.51 | 8.70 | 19.41 | -2.64 |
| | 3.5 | 392.64 | 416.83 | 444.51 | 12.09 | 13.84 | -0.42 |
| | 4.0 | 396.99 | 427.98 | 444.51 | 15.49 | 8.27 | 1.69 |
| | 4.5 | 401.34 | 435.62 | 444.51 | 17.14 | 4.45 | 2.91 |
| | 5.0 | 405.69 | 444.51 | 444.51 | 19.41 | 0.00 | 4.37 |
| | 5.5 | 416.83 | 444.51 | 444.51 | 13.84 | 0.00 | 3.11 |
| | 6.0 | 427.98 | 444.51 | 444.51 | 8.27 | 0.00 | 1.86 |
| | 6.5 | 435.62 | 444.51 | 444.51 | 4.45 | 0.00 | 1.00 |
| | 7.0 | 444.51 | 444.51 | 444.51 | 0.00 | 0.00 | 0.00 |
| | 7.5 | 444.51 | 444.51 | 444.51 | 0.00 | 0.00 | 0.00 |
| | 8.0 | 444.51 | 444.51 | 444.51 | 0.00 | 0.00 | 0.00 |
| Polymer-type magnetic material | 2.0 | 333.42 | 354.75 | 374.55 | 10.67 | 9.90 | 0.22 |
| | 2.5 | 337.69 | 361.14 | 380.90 | 11.72 | 9.88 | 0.51 |
| | 3.0 | 341.97 | 367.53 | 387.47 | 12.78 | 9.97 | 0.77 |
| | 3.5 | 348.36 | 371.04 | 387.47 | 11.34 | 8.21 | 0.84 |
| | 4.0 | 354.75 | 374.55 | 387.47 | 9.90 | 6.46 | 0.92 |
| | 4.5 | 361.14 | 380.90 | 387.47 | 9.88 | 3.28 | 1.73 |
| | 5.0 | 367.53 | 387.47 | 387.47 | 9.97 | 0.00 | 2.57 |
| | 5.5 | 371.04 | 387.47 | 387.47 | 8.21 | 0.00 | 2.12 |
| | 6.0 | 374.55 | 387.47 | 387.47 | 6.46 | 0.00 | 1.67 |
| | 6.5 | 380.90 | 387.47 | 387.47 | 3.28 | 0.00 | 0.85 |
| | 7.0 | 387.47 | 387.47 | 387.47 | 0.00 | 0.00 | 0.00 |
| | 7.5 | 387.47 | 387.47 | 387.47 | 0.00 | 0.00 | 0.00 |
| | 8.0 | 387.47 | 387.47 | 387.47 | 0.00 | 0.00 | 0.00 |

As can be seen from the above table, when the distance between the magnetic unit and the shield unit was 4.0 mm to 6.0 mm (sintered ferrite) or 4.5 mm to 6.0 mm (polymer-type magnetic material) in device A, the calculated value of Relationship (1) was 1.1 or more. Meanwhile, when it was outside the above ranges, there was a problem in that the Q factor was low, which deteriorated the resonance characteristics, or the overall thickness of the device increased without an additional enhancement of the Q factor. In particular, the calculated value of Relationship (1) was the highest when the distance between the magnetic unit and the shield unit was 5.0 mm.

[Table 3]

| Calculation of Relationship (1) using Q factor for Device B ($\Delta d$ = 2 mm) | | | | | | |
|---|---|---|---|---|---|---|
| Magnetic unit | Distance (mm) between magnetic unit and shield unit | Qa | Q | Qb | $\Delta$Q1 | $\Delta$Q2 | Calculated value of Relationship (1) |
| Sintered ferrite | 2.0 | 601.29 | 653.56 | 724.24 | 26.13 | 35.34 | -1.41 |
| | 2.5 | 617.71 | 663.28 | 747.32 | 22.78 | 42.02 | -2.90 |
| | 3.0 | 634.13 | 672.99 | 760.10 | 19.43 | 43.55 | -3.58 |
| | 3.5 | 643.84 | 698.62 | 760.10 | 27.39 | 30.74 | -0.48 |
| | 4.0 | 653.56 | 724.24 | 760.10 | 35.34 | 17.93 | 2.40 |
| | 4.5 | 663.28 | 747.32 | 760.10 | 42.02 | 6.39 | 4.77 |
| | 5.0 | 672.99 | 760.10 | 760.10 | 43.55 | 0.00 | 5.73 |
| | 5.5 | 698.62 | 760.10 | 760.10 | 30.74 | 0.00 | 4.04 |
| | 6.0 | 724.24 | 760.10 | 760.10 | 17.93 | 0.00 | 2.36 |
| | 6.5 | 747.32 | 760.10 | 760.10 | 6.39 | 0.00 | 0.84 |
| | 7.0 | 760.10 | 760.10 | 760.10 | 0.00 | 0.00 | 0.00 |
| | 7.5 | 760.10 | 760.10 | 760.10 | 0.00 | 0.00 | 0.00 |
| | 8.0 | 760.10 | 760.10 | 760.10 | 0.00 | 0.00 | 0.00 |
| Polymer-type magnetic material | 2.0 | 590.32 | 641.33 | 683.26 | 25.51 | 20.96 | 0.71 |
| | 2.5 | 607.20 | 649.96 | 692.50 | 21.38 | 21.27 | 0.02 |
| | 3.0 | 624.08 | 658.58 | 709.30 | 17.25 | 25.36 | -1.23 |
| | 3.5 | 632.71 | 670.92 | 709.30 | 19.11 | 19.19 | -0.01 |
| | 4.0 | 641.33 | 683.26 | 709.30 | 20.96 | 13.02 | 1.16 |
| | 4.5 | 649.96 | 692.50 | 709.30 | 21.27 | 8.40 | 1.86 |
| | 5.0 | 658.58 | 709.30 | 709.30 | 25.36 | 0.00 | 3.57 |
| | 5.5 | 670.92 | 709.30 | 709.30 | 19.19 | 0.00 | 2.70 |
| | 6.0 | 683.26 | 709.30 | 709.30 | 13.02 | 0.00 | 1.84 |
| | 6.5 | 692.50 | 709.30 | 709.30 | 8.40 | 0.00 | 1.18 |
| | 7.0 | 709.30 | 709.30 | 709.30 | 0.00 | 0.00 | 0.00 |
| | 7.5 | 709.30 | 709.30 | 709.30 | 0.00 | 0.00 | 0.00 |
| | 8.0 | 709.30 | 709.30 | 709.30 | 0.00 | 0.00 | 0.00 |

As can be seen from the above table, when the distance between the magnetic unit and the shield unit was 4.0 mm to 6.0 mm (sintered ferrite) or 4.0 mm to 6.5 mm (polymer-type magnetic material) in device B, the calculated value of Relationship (1) was 1.1 or more. Meanwhile, when it was outside the above ranges, there was a problem in that the Q factor was low, which deteriorated the resonance characteristics, or the overall thickness of the device increased without an additional enhancement of the Q factor. In particular, the calculated value of Relationship (1) was the highest when the distance between the magnetic unit and the shield unit was 5.0 mm.

[Table 4]

| Calculation of Relationship (2) using resistance (R) of the coil unit for Device A (Δd = 2 mm) | | | | | | | |
|---|---|---|---|---|---|---|---|
| Magnetic unit | Distance (mm) between magnetic unit and shield unit | Ra | R | Rb | ΔR1 | ΔR2 | Calculated value of Relationship (2) |
| Sintered ferrite | 2.0 | 63.0 | 61.0 | 57.0 | -1.00 | -2.00 | 1.64 |
| | 2.5 | 62.5 | 60.5 | 56.0 | -1.00 | -2.25 | 2.07 |
| | 3.0 | 62.0 | 60.0 | 55.0 | -1.00 | -2.50 | 2.50 |
| | 3.5 | 61.5 | 58.5 | 55.0 | -1.50 | -1.75 | 0.43 |
| | 4.0 | 61.0 | 57.0 | 55.0 | -2.00 | -1.00 | -1.75 |
| | 4.5 | 60.5 | 56.0 | 55.0 | -2.25 | -0.50 | -3.13 |
| | 5.0 | 60.0 | 55.0 | 55.0 | -2.50 | 0.00 | -4.55 |
| | 5.5 | 58.5 | 55.0 | 55.0 | -1.75 | 0.00 | -3.18 |
| | 6.0 | 57.0 | 55.0 | 55.0 | -1.00 | 0.00 | -1.82 |
| | 6.5 | 56.0 | 55.0 | 55.0 | -0.50 | 0.00 | -0.91 |
| | 7.0 | 55.0 | 55.0 | 55.0 | 0.00 | 0.00 | 0.00 |
| | 7.5 | 55.0 | 55.0 | 55.0 | 0.00 | 0.00 | 0.00 |
| | 8.0 | 55.0 | 55.0 | 55.0 | 0.00 | 0.00 | 0.00 |
| Polymer-type magnetic material | 2.0 | 65.0 | 62.5 | 60.0 | -1.25 | -1.25 | 0.00 |
| | 2.5 | 64.5 | 61.8 | 59.0 | -1.38 | -1.38 | 0.00 |
| | 3.0 | 64.0 | 61.0 | 58.0 | -1.50 | -1.50 | 0.00 |
| | 3.5 | 63.3 | 60.5 | 58.0 | -1.38 | -1.25 | -0.21 |
| | 4.0 | 62.5 | 60.0 | 58.0 | -1.25 | -1.00 | -0.42 |
| | 4.5 | 61.8 | 59.0 | 58.0 | -1.38 | -0.50 | -1.48 |
| | 5.0 | 61.0 | 58.0 | 58.0 | -1.50 | 0.00 | -2.59 |
| | 5.5 | 60.5 | 58.0 | 58.0 | -1.25 | 0.00 | -2.16 |
| | 6.0 | 60.0 | 58.0 | 58.0 | -1.00 | 0.00 | -1.72 |
| | 6.5 | 59.0 | 58.0 | 58.0 | -0.50 | 0.00 | -0.86 |
| | 7.0 | 58.0 | 58.0 | 58.0 | 0.00 | 0.00 | 0.00 |
| | 7.5 | 58.0 | 58.0 | 58.0 | 0.00 | 0.00 | 0.00 |
| | 8.0 | 58.0 | 58.0 | 58.0 | 0.00 | 0.00 | 0.00 |

As can be seen from the above table, when the distance between the magnetic unit and the shield unit was 4.0 mm to 6.0 mm (sintered ferrite) or 4.5 mm to 6.0 mm (polymer-type magnetic material) in device A, the calculated value of Relationship (2) was -1.1 or less. Meanwhile, when it was outside the above ranges, there was a problem in that the resistance of the coil unit increased, which intensified heat generation during wireless charging, or the overall thickness of the device increased without an additional decrease of the resistance. In particular, the calculated value of Relationship (2) was the lowest when the distance between the magnetic unit and the shield unit was 5.0 mm.

[Table 5]

| Calculation of Relationship (2) using resistance (R) of the coil unit for Device B (Δd = 2 mm) | | | | | | | |
|---|---|---|---|---|---|---|---|
| Magnetic unit | Distance (mm) between magnetic unit and shield unit | Ra | R | Rb | ΔR1 | ΔR2 | Calculated value of Relationship (2) |
| Sintered ferrite | 2.0 | 87.0 | 81.0 | 74.0 | -3.00 | -3.50 | 0.62 |
| | 2.5 | 85.0 | 80.0 | 72.0 | -2.50 | -4.00 | 1.88 |
| | 3.0 | 83.0 | 79.0 | 71.0 | -2.00 | -4.00 | 2.53 |
| | 3.5 | 82.0 | 76.5 | 71.0 | -2.75 | -2.75 | 0.00 |
| | 4.0 | 81.0 | 74.0 | 71.0 | -3.50 | -1.50 | -2.70 |
| | 4.5 | 80.0 | 72.0 | 71.0 | -4.00 | -0.50 | -4.86 |
| | 5.0 | 79.0 | 71.0 | 71.0 | -4.00 | 0.00 | -5.63 |
| | 5.5 | 76.5 | 71.0 | 71.0 | -2.75 | 0.00 | -3.87 |
| | 6.0 | 74.0 | 71.0 | 71.0 | -1.50 | 0.00 | -2.11 |
| | 6.5 | 72.0 | 71.0 | 71.0 | -0.50 | 0.00 | -0.70 |
| | 7.0 | 71.0 | 71.0 | 71.0 | 0.00 | 0.00 | 0.00 |
| | 7.5 | 71.0 | 71.0 | 71.0 | 0.00 | 0.00 | 0.00 |
| | 8.0 | 71.0 | 71.0 | 71.0 | 0.00 | 0.00 | 0.00 |
| Polymer-type magnetic material | 2.0 | 85.0 | 79.0 | 75.0 | -3.00 | -2.00 | -1.27 |
| | 2.5 | 83.0 | 78.0 | 74.0 | -2.50 | -2.00 | -0.64 |
| | 3.0 | 81.0 | 77.0 | 73.0 | -2.00 | -2.00 | 0.00 |
| | 3.5 | 80.0 | 76.0 | 73.0 | -2.00 | -1.50 | -0.66 |
| | 4.0 | 79.0 | 75.0 | 73.0 | -2.00 | -1.00 | -1.33 |
| | 4.5 | 78.0 | 74.0 | 73.0 | -2.00 | -0.50 | -2.03 |
| | 5.0 | 77.0 | 73.0 | 73.0 | -2.00 | 0.00 | -2.74 |
| | 5.5 | 76.0 | 73.0 | 73.0 | -1.50 | 0.00 | -2.05 |
| | 6.0 | 75.0 | 73.0 | 73.0 | -1.00 | 0.00 | -1.37 |
| | 6.5 | 74.0 | 73.0 | 73.0 | -0.50 | 0.00 | -0.68 |
| | 7.0 | 73.0 | 73.0 | 73.0 | 0.00 | 0.00 | 0.00 |
| | 7.5 | 73.0 | 73.0 | 73.0 | 0.00 | 0.00 | 0.00 |
| | 8.0 | 73.0 | 73.0 | 73.0 | 0.00 | 0.00 | 0.00 |

As can be seen from the above table, when the distance between the magnetic unit and the shield unit was 4.0 mm to 6.0 mm (sintered ferrite and polymer-type magnetic material) in device B, the calculated value of Relationship (2) was -1.1 or less. Meanwhile, when it was outside the above ranges, there was a problem in that the resistance of the coil unit increased, which intensified heat generation during wireless charging, or the overall thickness of the device increased without an additional decrease of the resistance. In particular, the calculated value of Relationship (2) was the lowest when the distance between the magnetic unit and the shield unit was 5.0 mm.

[Table 6]

| Calculation of Relationship (3) using inductance (L) of the coil unit for Device A ($\Delta d$ = 2 mm) | | | | | | | |
|---|---|---|---|---|---|---|---|
| Magnetic unit | Distance (mm) between magnetic unit and shield unit | La | L | Lb | $\Delta L1$ | $\Delta L2$ | Calculated value of Relationship (3) |
| Sintered ferrite | 2.0 | 44.8 | 45.4 | 45.7 | 0.28 | 0.18 | 0.22 |
| | 2.5 | 45.0 | 45.5 | 45.7 | 0.26 | 0.11 | 0.33 |
| | 3.0 | 45.1 | 45.6 | 45.8 | 0.25 | 0.10 | 0.33 |
| | 3.5 | 45.2 | 45.7 | 45.8 | 0.21 | 0.07 | 0.30 |
| | 4.0 | 45.4 | 45.7 | 45.8 | 0.18 | 0.05 | 0.27 |
| | 4.5 | 45.5 | 45.7 | 45.8 | 0.11 | 0.05 | 0.14 |
| | 5.0 | 45.6 | 45.8 | 45.8 | 0.10 | 0.00 | 0.22 |
| | 5.5 | 45.7 | 45.8 | 45.8 | 0.07 | 0.00 | 0.16 |
| | 6.0 | 45.7 | 45.8 | 45.8 | 0.05 | 0.00 | 0.11 |
| | 6.5 | 45.7 | 45.8 | 45.8 | 0.05 | 0.00 | 0.11 |
| | 7.0 | 45.8 | 45.8 | 45.8 | 0.00 | 0.00 | 0.00 |
| | 7.5 | 45.8 | 45.8 | 45.8 | 0.00 | 0.00 | 0.00 |
| | 8.0 | 45.8 | 45.8 | 45.8 | 0.00 | 0.00 | 0.00 |
| Polymer-type magnetic material | 2.0 | 40.6 | 41.5 | 42.1 | 0.45 | 0.30 | 0.36 |
| | 2.5 | 40.8 | 41.8 | 42.1 | 0.48 | 0.18 | 0.72 |
| | 3.0 | 41.0 | 42.0 | 42.1 | 0.50 | 0.05 | 1.07 |
| | 3.5 | 41.3 | 42.1 | 42.1 | 0.40 | 0.03 | 0.89 |
| | 4.0 | 41.5 | 42.1 | 42.1 | 0.30 | 0.00 | 0.71 |
| | 4.5 | 41.8 | 42.1 | 42.1 | 0.18 | 0.00 | 0.42 |
| | 5.0 | 42.0 | 42.1 | 42.1 | 0.05 | 0.00 | 0.12 |
| | 5.5 | 42.1 | 42.1 | 42.1 | 0.03 | 0.00 | 0.06 |
| | 6.0 | 42.1 | 42.1 | 42.1 | 0.00 | 0.00 | 0.00 |
| | 6.5 | 42.1 | 42.1 | 42.1 | 0.00 | 0.00 | 0.00 |
| | 7.0 | 42.1 | 42.1 | 42.1 | 0.00 | 0.00 | 0.00 |
| | 7.5 | 42.1 | 42.1 | 42.1 | 0.00 | 0.00 | 0.00 |
| | 8.0 | 42.1 | 42.1 | 42.1 | 0.00 | 0.00 | 0.00 |

As can be seen from the above table, when the distance between the magnetic unit and the shield unit was 2.0 mm to 6.5 mm (sintered ferrite) or 2.0 mm to 5.0 mm (polymer-type magnetic material) in device A, the calculated value of Relationship (3) was 0.1 or more. Meanwhile, when it was outside the above ranges, there was a problem in that the inductance of the coil unit decreased, which deteriorated charging efficiency, or the overall thickness of the device increased without an additional enhancement of the inductance.

[Table 7]

| Calculation of Relationship (3) using inductance (L) of the coil unit for Device B ($\Delta d$ = 2 mm) | | | | | | | |
|---|---|---|---|---|---|---|---|
| Magnetic unit | Distance (mm) between magnetic unit and shield unit | La | L | Lb | $\Delta L1$ | $\Delta L2$ | Calculated value of Relationship (3) |
| Sintered ferrite | 2.0 | 98.0 | 99.1 | 100.4 | 0.55 | 0.65 | -0.10 |
| | 2.5 | 98.3 | 99.4 | 100.8 | 0.52 | 0.73 | -0.20 |
| | 3.0 | 98.6 | 99.6 | 101.1 | 0.50 | 0.75 | -0.25 |
| | 3.5 | 98.9 | 100.0 | 101.1 | 0.58 | 0.55 | 0.03 |
| | 4.0 | 99.1 | 100.4 | 101.1 | 0.65 | 0.35 | 0.30 |
| | 4.5 | 99.4 | 100.8 | 101.1 | 0.73 | 0.15 | 0.57 |
| | 5.0 | 99.6 | 101.1 | 101.1 | 0.75 | 0.00 | 0.74 |
| | 5.5 | 100.0 | 101.1 | 101.1 | 0.55 | 0.00 | 0.54 |
| | 6.0 | 100.4 | 101.1 | 101.1 | 0.35 | 0.00 | 0.35 |
| | 6.5 | 100.8 | 101.1 | 101.1 | 0.15 | 0.00 | 0.15 |
| | 7.0 | 101.1 | 101.1 | 101.1 | 0.00 | 0.00 | 0.00 |
| | 7.5 | 101.1 | 101.1 | 101.1 | 0.00 | 0.00 | 0.00 |
| | 8.0 | 101.1 | 101.1 | 101.1 | 0.00 | 0.00 | 0.00 |
| Polymer-type magnetic material | 2.0 | 94.0 | 94.9 | 96.0 | 0.42 | 0.58 | -0.16 |
| | 2.5 | 94.4 | 94.9 | 96.0 | 0.29 | 0.54 | -0.26 |
| | 3.0 | 94.7 | 95.0 | 97.0 | 0.15 | 1.00 | -0.89 |
| | 3.5 | 94.8 | 95.5 | 97.0 | 0.36 | 0.75 | -0.41 |
| | 4.0 | 94.9 | 96.0 | 97.0 | 0.58 | 0.50 | 0.08 |
| | 4.5 | 94.9 | 96.0 | 97.0 | 0.54 | 0.50 | 0.04 |
| | 5.0 | 95.0 | 97.0 | 97.0 | 1.00 | 0.00 | 1.03 |
| | 5.5 | 95.5 | 97.0 | 97.0 | 0.75 | 0.00 | 0.77 |
| | 6.0 | 96.0 | 97.0 | 97.0 | 0.50 | 0.00 | 0.52 |
| | 6.5 | 96.0 | 97.0 | 97.0 | 0.50 | 0.00 | 0.52 |
| | 7.0 | 97.0 | 97.0 | 97.0 | 0.00 | 0.00 | 0.00 |
| | 7.5 | 97.0 | 97.0 | 97.0 | 0.00 | 0.00 | 0.00 |
| | 8.0 | 97.0 | 97.0 | 97.0 | 0.00 | 0.00 | 0.00 |

As can be seen from the above table, when the distance between the magnetic unit and the shield unit was 4.0 mm to 6.5 mm (sintered ferrite) or 5.0 mm to 6.5 mm (polymer-type magnetic material) in device B, the calculated value of Relationship (3) was 0.1 or more. Meanwhile, when it was outside the above ranges, there was a problem in that the inductance of the coil unit decreased, which deteriorated charging efficiency, or the overall thickness of the device increased without an additional enhancement of the inductance. In particular, the calculated value of Relationship (3) was the highest when the distance between the magnetic unit and the shield unit was 5.0 mm.

**Test Example 2: Measurement of charging efficiency**

The wireless charging device A or B prepared above was used as a receiver for measuring charging efficiency, and the wireless charging device C prepared above was used as a transmitter. While the transmitter voltage was fixed at 380 V and the receiver current was fixed at 20 A, the transmitter current was changed to adjust the transmit power. When the received power of the receiver reached 8.8 kW, the charging efficiency was calculated according to the equation

below.

$$\text{Charging efficiency (\%)} = (\text{received power (kW)} / \text{transmitted power (kW)}) \times 100$$

As a result, the highest charging efficiency (up to 87.7%) was measured when the distance between the magnetic unit and the shield unit was 5.0 mm in both Devices A and B. Meanwhile, when the distance between the magnetic unit and the shield unit was narrower than 5.0 mm, the charging efficiency gradually decreased. On the other hand, when the distance between the magnetic unit and the shield unit was wider than 5.0 mm, no further enhancement in charging efficiency was observed.

**Claims**

1. A wireless charging device, which comprises a coil unit comprising a conductive wire; a magnetic unit disposed on the coil unit; and a shield unit disposed on the magnetic unit,

   wherein the following Relationship (1) is satisfied:

   $$1.1 \leq [(\Delta Q1 - \Delta Q2) / Q] \times 100 \dots (1)$$

   wherein $\Delta Q1$ is $(Q - Qa) / \Delta d$, $\Delta Q2$ is $(Qb - Q) / \Delta d$,
   Q is the Q factor of the wireless charging device measured at a frequency of 85 kHz,
   Qa is the Q factor measured when the distance between the magnetic unit and the shield unit in the wireless charging device is further decreased by $\Delta d$ (mm),
   Qb is the Q factor measured when the distance between the magnetic unit and the shield unit in the wireless charging device is further increased by $\Delta d$ (mm),
   the Q factor is calculated as $2 \times \pi \times f \times L / R$, wherein f is the frequency (kHz), L is the inductance ($\mu$H) of the coil unit, and R is the resistance (m$\Omega$) of the coil unit, and
   Q, Qa, Qb, f, L, R, $\Delta Q1$, $\Delta Q2$, and $\Delta d$ are numerical values without respective units.

2. The wireless charging device of claim 1, wherein the wireless charging device further satisfies the following Relationship (2):

   $$-1.1 \geq [(\Delta R1 - \Delta R2) / R] \times 100 \dots (2)$$

   wherein $\Delta R1$ is $(R - Ra) / \Delta d$, $\Delta R2$ is $(Rb - R) / \Delta d$,
   R is the resistance (m$\Omega$) of the coil unit measured at a frequency of 85 kHz,
   Ra is the resistance (m$\Omega$) measured when the distance between the magnetic unit and the shield unit is further decreased by $\Delta d$ (mm),
   Rb is the resistance (m$\Omega$) measured when the distance between the magnetic unit and the shield unit is further increased by $\Delta d$ (mm), and
   R, Ra, Rb, $\Delta R1$, $\Delta R2$, and $\Delta d$ are numerical values without respective units.

3. The wireless charging device of claim 1, wherein the wireless charging device further satisfies the following Relationship (3):

   $$0.1 \leq [(L1 - \Delta L2) / L] \times 100 \dots (3)$$

   wherein $\Delta L1$ is $(L - La) / \Delta d$, $\Delta L2$ is $(Lb - L) / \Delta d$,
   L is the inductance ($\mu$H) of the coil unit measured at a frequency of 85 kHz,
   La is the inductance ($\mu$H) measured when the distance between the magnetic unit and the shield unit is further decreased by $\Delta d$ (mm),
   Lb is the inductance ($\mu$H) measured when the distance between the magnetic unit and the shield unit is further increased by $\Delta d$ (mm), and

L, La, Lb, ΔL1, ΔL2, and Δd are numerical values without respective units.

4. The wireless charging device of claim 1, wherein the distance between the magnetic unit and the shield unit is 4 mm to 6 mm.

5. The wireless charging device of claim 1, wherein the distance between the coil unit and the magnetic unit is 1 mm to 3 mm.

6. The wireless charging device of claim 1, wherein the magnetic unit comprises a sintered ferrite-based magnetic material.

7. The wireless charging device of claim 1, wherein the magnetic unit comprises a polymer resin and a magnetic powder dispersed in the polymer resin.

8. The wireless charging device of claim 1, wherein the coil unit has an inductance of 45 μH or more and a resistance of 80 mΩ or less at a frequency of 85 kHz, and
   the wireless charging device has a Q factor of 350 or more at a frequency of 85 kHz.

9. The wireless charging device of claim 1, wherein the coil unit is one in which a conductive wire having a diameter of 3 mm to 7 mm is wound 5 to 20 times,

   the magnetic unit is a rectangular sheet having a side length of 300 mm to 350 mm and a thickness of 3 mm to 7 mm, and
   the shield unit is a rectangular sheet having a side length of 300 mm to 400 mm and a thickness of 1 mm to 3 mm.

10. A transportation means, which comprises a wireless charging device, wherein the wireless charging device comprises a coil unit comprising a conductive wire; a magnetic unit disposed on the coil unit; and a shield unit disposed on the magnetic unit, and the following Relationship (1) is satisfied:

$$1.1 \le [(\Delta Q1 - \Delta Q2) \, / \, Q] \times 100 \; ... \; (1)$$

wherein ΔQ1 is (Q - Qa) / Δd, ΔQ2 is (Qb - Q) / Δd,
Q is the Q factor of the wireless charging device measured at a frequency of 85 kHz,
Qa is the Q factor measured when the distance between the magnetic unit and the shield unit in the wireless charging device is further decreased by Δd (mm),
Qb is the Q factor measured when the distance between the magnetic unit and the shield unit in the wireless charging device is further increased by Δd (mm),
the Q factor is calculated as $2 \times \pi \times f \times L \, / \, R$, wherein f is the frequency (kHz), L is the inductance (μH) of the coil unit, and R is the resistance (mΩ) of the coil unit, and
Q, Qa, Qb, f, L, R, ΔQ1, ΔQ2, and Δd are numerical values without respective units.

[Fig. 1]

Distance between magnetic unit and shield unit (mm)

[Fig. 2]

Distance between magnetic unit and shield unit (mm)

[Fig. 3]

[Fig. 4]

[Fig. 5]

[Fig. 6]

10

A

630
620  600
610

200

A'

[Fig. 7]

10

300    400

630

620

610

200    100

A – A'

EP 4 261 859 A1

[Fig. 8]

10

[Fig. 9]

200

[Fig. 10]

[Fig. 11]

## INTERNATIONAL SEARCH REPORT

| International application No. |
| --- |
| **PCT/KR2021/014403** |

| | |
| --- | --- |
| **A.** | **CLASSIFICATION OF SUBJECT MATTER** |

**H01F 38/14**(2006.01)i; **H02J 50/10**(2016.01)i; **H02J 50/00**(2016.01)i; **H01F 27/22**(2006.01)i; **H01F 1/03**(2006.01)i; **H01F 1/08**(2006.01)i; **B60L 53/12**(2019.01)i

According to International Patent Classification (IPC) or to both national classification and IPC

| | |
| --- | --- |
| **B.** | **FIELDS SEARCHED** |

Minimum documentation searched (classification system followed by classification symbols)

H01F 38/14(2006.01); G06K 19/07(2006.01); H01F 27/08(2006.01); H01Q 7/00(2006.01); H02J 17/00(2006.01); H02J 50/00(2016.01); H02J 7/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무선충전(wireless charging), Q인자(Q factor), 자성부(magnetic unit), 쉴드부(shield unit), 인덕턴스(inductance)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | US 2017-0338023 A1 (LEAR CORPORATION) 23 November 2017 (2017-11-23)<br>See paragraphs [0028]-[0056]; and figures 1-6B. | 1-10 |
| A | KR 10-2014-0067957 A (FUJITSU LIMITED) 05 June 2014 (2014-06-05)<br>See paragraphs [0032]-[0060]; and figures 8-16. | 1-10 |
| A | KR 10-1584800 B1 (KWANGWOON UNIVERSITY INDUSTRY-ACADEMIC COLLABORATION FOUNDATION) 21 January 2016 (2016-01-21)<br>See paragraphs [0067]-[0111]; and figures 7-14. | 1-10 |
| A | KR 10-2015-0107280 A (LG INNOTEK CO., LTD.) 23 September 2015 (2015-09-23)<br>See paragraphs [0019]-[0039]; and figures 2-7. | 1-10 |
| A | KR 10-2020-0052034 A (LG ELECTRONICS INC.) 14 May 2020 (2020-05-14)<br>See paragraphs [0019]-[0071]; and figures 1-10a. | 1-10 |

| | | |
| --- | --- | --- |
| ☐ Further documents are listed in the continuation of Box C. | | ☑ See patent family annex. |

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **21 January 2022** | **21 January 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT
### Information on patent family members

International application No.

**PCT/KR2021/014403**

| Patent document cited in search report | | | Publication date (day/month/year) | Patent family member(s) | | | Publication date (day/month/year) |
|---|---|---|---|---|---|---|---|
| US | 2017-0338023 | A1 | 23 November 2017 | CN | 107404824 | A | 28 November 2017 |
| | | | | CN | 107404824 | B | 04 June 2021 |
| | | | | DE | 102017200465 | A1 | 23 November 2017 |
| | | | | US | 10756572 | B2 | 25 August 2020 |
| KR | 10-2014-0067957 | A | 05 June 2014 | CN | 103229194 | A | 31 July 2013 |
| | | | | CN | 103229194 | B | 17 August 2016 |
| | | | | EP | 2648135 | A1 | 09 October 2013 |
| | | | | EP | 2648135 | A4 | 28 September 2016 |
| | | | | EP | 2648135 | B1 | 17 July 2019 |
| | | | | JP | 5418694 | B2 | 19 February 2014 |
| | | | | KR | 10-1440741 | B1 | 17 September 2014 |
| | | | | US | 09362985 | B2 | 07 June 2016 |
| | | | | US | 2013-0249312 | A1 | 26 September 2013 |
| | | | | WO | 2012-073305 | A1 | 07 June 2012 |
| KR | 10-1584800 | B1 | 21 January 2016 | None | | | |
| KR | 10-2015-0107280 | A | 23 September 2015 | None | | | |
| KR | 10-2020-0052034 | A | 14 May 2020 | WO | 2020-096344 | A1 | 14 May 2020 |

Form PCT/ISA/210 (patent family annex) (July 2019)

**REFERENCES CITED IN THE DESCRIPTION**

**Patent documents cited in the description**

- KR 20110042403